# EUROPEAN PATENT SPECIFICATION

(11) **EP 2 448 696 B1**
(45) Date of publication and mention of the grant of the patent: **12.02.2020**
(21) Application number: 10730709.2
(22) Date of filing: 28.06.2010
(51) Int. Cl.: B22D 17/00, B22C 25/00, G06F 17/50

(54) **SIMULATION OF A PROCESS**
PROZESSSIMULATION
SIMULATION DE PROCESSUS

(30) Priority: 03.07.2009 EP 09008730
(43) Date of publication of application: 09.05.2012
(73) Proprietor: MAGMA Giessereitechnologie GmbH, 52072 Aachen (DE)
(72) Inventor: HANSEN, Preben, Nordgaard, DK-3140 Ålsgårde (DK); KOKOT, Volker, 52066 Aachen (DE); VONHOEGEN, Herbert, 52080 Aachen (DE); REIM, Johannes, 52076 Aachen (DE)
(74) Representative: Nordic Patent Service A/S
(86) International application number: PCT/EP2010/003840
(87) International publication number: WO 2011/000506

(56) References cited:
- EP-A1- 1 724 716
- WO-A1-01/23163
- US-B1- 6 298 898
- STURM J C ET AL: "Stand der Simulation für Gusseisen", GIESSEREI, GIESSEREI VERLAG, DUSSELDORF, DE, vol. 2, 1 January 2004 (2004-01-01), pages 4-15, XP002337961, ISSN: 0016-9765
- HARTMANN G C ET AL: "DIE ZWEITE GENERATION VON SIMULATIONSWERKZEUGEN PRAKTISCHE ANWENDUNG DER RECHNERISCHEN OPTIMIERUNG IM DRUCKGUSS", GIESSEREI, GIESSEREI VERLAG, DUSSELDORF, DE, vol. 91, no. 2, 1 January 2004 (2004-01-01), pages 38-42, XP009050761, ISSN: 0016-9765
- FLENDER E ET AL: "Cost Effective Casting Manufacturing by Means of Computer Simulation. WIRTSCAFTLICHE FERTIGUNG VON GUSSTEILEN DURCH DIE UNTERSTUETZUNG VON SIMULATIONSWERKZEUGEN. COMPRESSION DES DEPENSES EN FONDERIE A L'AIDE DE LA SIMULATION", WORLD FOUNDRY CONGRESS, XX, XX, 1 January 1998 (1998-01-01), pages 1-14, XP002337962,
- CLEARY P W ET AL: "SPH: a new way of modelling high pressure die casting", CONFERENCE ON CFD IN THE MINERALS AND PROCESS INDUSTRIES, CSIRO, MELBOURNE, AU, 10 December 2003 (2003-12-10), pages 421-426, XP002337963,
- HA J ET AL: "Simulation of die filling in gravity die casting using SPH and MAGMASOFT (tm)", CONFERENCE ON CFD IN THE MINERALS AND PROCESS INDUSTRIES, CSIRO, MELBOURNE, AU, 1 January 1999 (1999-01-01), pages 423-428, XP002337964,
- CLEARY AND J HA P W: "Three dimensional modelling of high pressure die casting", CONFERENCE ON CFD IN THE MINERALS AND PROCESS INDUSTRIES, CSIRO, MELBOURNE, AU, 1 January 1999 (1999-01-01), pages 437-442, XP002337965,
- MIRBAGHERI S M H ET AL: "3D computer simulation of melt flow and heat transfer in the lost foam casting process", INTERNATIONAL JOURNAL OF NUMERICAL METHODS IN ENGINEERING, CHICHESTER, GB, vol. 58, no. 5, 7 October 2003 (2003-10-07), pages 723-748, XP002337967, ISSN: 0029-5981, DOI: DOI:10.1002/NME.797
- WU M ET AL: "Numerical simulation of the casting process of titanium tooth crowns and bridges", JOURNAL OF MATERIALS SCIENCE. MATERIALS IN MEDICINE, CHAPMAN AND HALL, LONDON, GB, vol. 12, no. 6, 1 January 2001 (2001-01-01), pages 485-490, XP002337968, ISSN: 0957-4530, DOI: DOI:10.1023/A:1011207326961
- FLEURY G ET AL: "Multi-agent approach and stochastic optimization: random events in manufacturing systems", JOURNAL OF INTELLIGENT MANUFACTURING, CHAPMAN AND HALL, LONDON, GB, vol. 10, no. 1, 1 January 1999 (1999-01-01), pages 81-101, XP002337969, ISSN: 0956-5515, DOI: DOI:10.1023/A:1008972615329
- HARTMANN G C ET AL: "Numerical optimization of casting processes - leveraging coupled proce", CAD-FEM USERS MEETING. INTERNATIONAL CONGRESS ON FEM TECHNOLOGY, XX, XX, 12 November 2003 (2003-11-12), pages 1-11, XP009050767,
- STURM J C ET AL: "Optimierung von Giesstechnik und Gusteilen", SYMPOSIUM SIMULATION IN DER PRODUKT- UND PROZESSENTWICKLUNG, XX, XX, 1 January 2003 (2003-01-01), pages 39-46, XP002337983,

## Description

### FIELD

The present application relates to simulation of processes that involve the filling of a cavity, cooling in combination with phase transformation / solidification, and the subsequent removal of a part from the cavity. In particular the application relates to a manner of displaying a simulation of such processes.

### BACKGROUND

A true 3-D simulation of an injection molding process or of a metal casting process involves a complex system of many equations. Progress has been made in the past to improve the efficiency of the simulation methods to cope with these complex calculations. With optimized software and the processing power of modern workstations or PCs such simulations can be performed in a workplace, i.e. the results are obtained fast enough to be suitable outside the purely scientific research area and can be applied by engineers in research and development departments, foundries and manufacturers of injection molded articles.

Advanced versions of software for simulation of these processes are designed to guide a user through the setup process which requires many parameters to be set and input. Some users find such systems to be difficult to overview and also to make changes in.

As computing power becomes cheaper and cheaper and computers become more and more powerful users often spend more time on setting the parameters than actually performing simulations.

Thus, there exist a need for a user interface, an apparatus, a computer programmable medium and a method which offer a user an overview and control of simulation parameters that are efficient yet easy to use and operate.

### SUMMARY

On this background, the applicants realized that it would be advantageous to provide a graphical overview of the process itself in addition to a structural view of the component or article to be produced. The applicants realized that it would be advantageous to provide a tool that allows for asynchronous amendments being made through the use of different views which are functionally inter-linked.

This object is achieved by providing a method according to claim 1.

This object is also achieved by providing an apparatus according to claim 13.

This object is also achieved by providing a computer readable medium according to claim 14.

Further advantages, features and properties of the method, the apparatus, the computer readable medium and the user interface will become apparent from the detailed description.

### BRIEF DESCRIPTION OF THE DRAWINGS

In the following detailed portion of the present description, the teachings of the present document will be explained in more detail with reference to the exemplary embodiments shown in the drawings, in which:
Figure 1 is a view of an apparatus according to the teachings herein,
Figure 2 is schematic view of an apparatus according to the teachings herein,
Figure 3 shows a series of screen shots from an apparatus according to an embodiment,
Figure 4 shows a flowchart of a method according to an embodiment, and
Figures 5 to 14 each show a screen shot from an apparatus according to an embodiment.

### DETAILED DESCRIPTION

In the following detailed description the user interface, the method and the software product according to the teachings of this application are described in detail with reference to the exemplary embodiments.

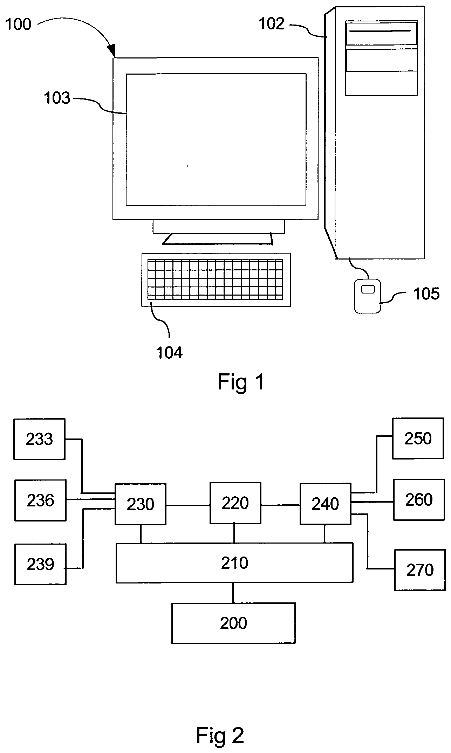

An embodiment of an apparatus 100 is illustrated in detail in FIG. 1 in the form of a computer terminal 100. The computer terminal 100 is in this example a desktop computer 100 that has a display screen 103, a keypad 104 and navigational means in the form of a cursor controlling input means which in this example is a computer mouse 105. The computer terminal also has a cabinet 102 in which internal components are housed.

It should be noted that other embodiments of the apparatus 100 are plausible, such as a mobile communications terminal, a personal digital assistant (PDA), a laptop, palmtop or notebook computer or a mainframe computer.

The internal component, software and protocol structure of the computer terminal 100 will now be described with reference to FIG. 2. The computer terminal has a controller 200 which is responsible for the overall operation of the computer terminal and may be implemented by any commercially available CPU ("Central Processing Unit"), DSP ("Digital Signal Processor") or any other electronic programmable logic device. The controller 200 has associated electronic memory 210 such as Random Access Memory (RAM), Read Only Memory (ROM), Electrically Erasable Programmable Read-Only Memory (EEPROM), flash memory, or any combination thereof. The memory 210 is used for various purposes by the controller 200, one of them being for storing data used by and program instructions for various software in the computer terminal. The software includes a real-time operating system 220, drivers for a man-machine interface (MMI) 230, an application handler 240 as well as various applications. The applications can include a process simulation application 250, a computer aided design application 260, as well as various other applications 270, such as applications for file transfer, sending and receiving electronic mail messages

The MMI 230 also includes one or more hardware controllers, which together with the MMI drivers cooperate with the first display 233/103, and the keypad 236/104 as well as various other Input/Output devices such as the navigational input means 239/105.

In prior art systems a user was presented with a series of input fields or windows in which the necessary parameters were to be filled in.

As the last parameter had been set a user could initiate the simulation.

By realizing that by providing a plurality of views for the same process to be simulated and configuring a controller to inter-link these views of the process to be simulated a more flexible and easy to use user interface is achieved.

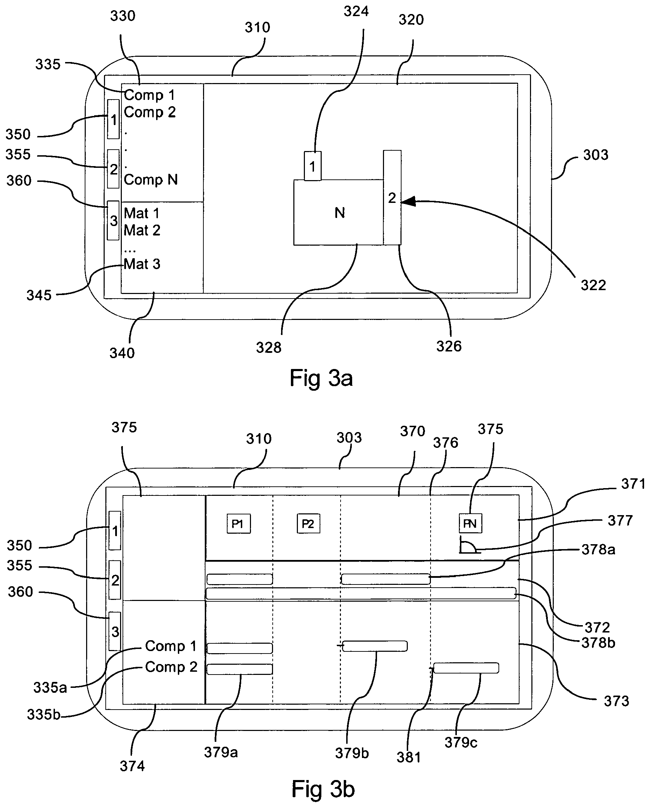

Numerical simulation of an injection molding process or a casting process on a computer can be carried out in accordance with an exemplary embodiment with the user interface illustrated in figure 3.

Figure 3 shows a screen shot view 303 of such a user interface being implemented in an apparatus such as above. It should be noted that even though the description refers to a computer terminal the teachings herein may be applied to any apparatus capable of performing simulation calculations and displaying data on a display.

Figure 3a shows a screen shot view comprising an application window 310 which further comprises a graphical geometry view or component input view window 320. A model or geometrical model 322 of a cast/molded component or article and/or a corresponding molding to be simulated is shown in the graphical geometry view 320. The model 322 comprises at least one component. In this example the model comprises three components, Comp 1 324, Comp 2 326 and Comp N 328.

In one embodiment the controller is further configured to display a component window 330. The controller is configured to display component data objects 335 corresponding to the components 324, 326, 328 comprised in the model 322. In this example three objects 335 are displayed. For clarity issues only one object is labeled with a reference sign 335. In this example it should be understood that the object labeled "Comp 1" corresponds to the component Comp 1 324, the object labeled "Comp 2" corresponds to the component Comp 2 326 and the object labeled "Comp N" corresponds to the component Comp N 328.

A controller is configured to link the objects 335 to the components 324, 326 and 328.

A controller is further configured to receive an input indicating a component 324, 326 or 328 and in response thereto mark the corresponding object 335 as selected.

A controller is further configured to receive an input indicating an object 335 and in response thereto mark the corresponding component 324, 326 or 328 as selected.

A controller is further configured to receive input relating to a selected object or component and in response thereto update both the component data object 335 and the component 324, 326 and 328.

In one embodiment the controller is further configured to display a material characteristics window 340. The controller is further configured to display material data objects 345 in the material window 340. Each material data object carries information on the characteristic and/or characteristics of a material that is simulated by the material data object.

In one embodiment the controller is configured to link the material characteristic objects 345 with corresponding component data objects 335.

In one embodiment the controller is configured to link the material characteristic objects 345 with corresponding components 324, 326, 328.

A controller is further configured to receive input relating to a selected material characteristic object 345, a component data object 335 or a component 324, 326, 328 and in response thereto update at least one of the other of the component data object 335, material characteristic data object 345 and the component 324, 326 and 328.

It should be noted that a casting may be made up of many geometrical components and all or each of these components have the same material (the cast alloy) and the controller is configured to treat these as a single material. It should also be noted that a component may consist of several materials, i.e being a composite casting material.

In one embodiment the controller is further arranged to display at least one mode indicating object 350, 355, 360. Each mode indicating object 350, 355, 360 correspond to an input mode for the simulation.

A controller is configured to receive an input on a mode indicating object 350, 355, 360 and in response thereto display the corresponding input view.

Examples of such modes are project views, geometry views, definition views, simulation views, database views and results views.

In one example one mode is component view and the corresponding input view is shown in figure 3a.

In one example one mode is process view and the corresponding input view is shown in figure 3b.

In one example one mode is dialogue view. A user is offered step by step to set up the simulation process with regards to inputting necessary parameters, constants, characteristics and limits.

In one example the dialogue view is incorporated into the process view.

It should be noted that more than one view may be displayed at the same time.

It should also be noted that the views are linked to one another and that an input in one view is updated in all other views.

Figure 3b shows a screen shot view comprising an application window 310 which further comprises a process overview window 371.

In one embodiment a controller is configured to display icons or other graphical symbols 375 indicating the purpose of each process step. Examples are preparation, pouring and solidification.

In one embodiment the process view window 370 comprises at least a process step separator 376. This provides a clear overview of what elements belong to which process step.

In one embodiment a controller is configured to display a parameter object 377. The controller is configured to display data relevant for a parameter that is associated with the parameter object 377. In one such embodiment the controller is further configured to receive input indicating a parameter object and, in response thereto, display a window in which data for the associated parameter is displayed. In one embodiment the controller is further configured to receive input in the displayed window and in response thereto update a parameter value.

In this embodiment the graphic representation of the parameter object is a graphical representation of the parameter value. The parameter value may be displayed as a graph of how the parameter changes during the process.

In one embodiment the process view window 370 comprises a process flow window 372.

In one embodiment the controller is configured to display at least one process step object 378 in the process flow window 372. In one embodiment a process step object 378 corresponds to at least one process step. The process steps comprised in a process flow object need not be the same as those displayed in the process overview window.

In one embodiment a process step object 378a comprise one process step.

In one embodiment a process step object 378b comprises more than one process step or a collective step. An example of a collective step is a step called "CASTING" which could be used to represent a whole casting process or injection molding process to be simulated.

In one embodiment a process step object 378 comprises a label indicating the process step.

In one embodiment a process step object is associated with process specific conditions and/or criteria. In one embodiment a controller is configured to receive input indicating a process step object 378 and in response thereto display a window in which data for the associated condition is displayed. In one embodiment the controller is further configured to receive input in the displayed window and in response thereto update a condition value.

In one embodiment the process view window 370 comprises a timeline window 373.

In one embodiment a controller is configured to display process timing objects 379 in the timeline window 373. In one embodiment a process timing object 379 is associated with a process step object 378. In one embodiment a process timing object 379 is associated with an event time which indicates at what stage in the process to be simulated a process step being represented by a process step object 378 is to be performed.

In one embodiment the controller is configured to associate a timing object with a time or timestamp. This time or timestamp indicates at which time (possibly relative time) a process step is to commence.

In one embodiment the controller is configured to associate a timing object with a condition. This condition indicates a special condition or circumstance (such as a specific temperature of a component has been reached) at which a process step is to commence.

In one embodiment the controller is configured to display a process timing object 379 with a label, which label indicates which process step the process timing object is associated with.

In one embodiment the controller is configured to display a process timing object 379 with a label, which label indicates which event time the process timing object is associated with.

In one embodiment a controller is configured to receive an input indicating a process timing object and in response thereto display a window through which the event time and/or process parameters may be changed.

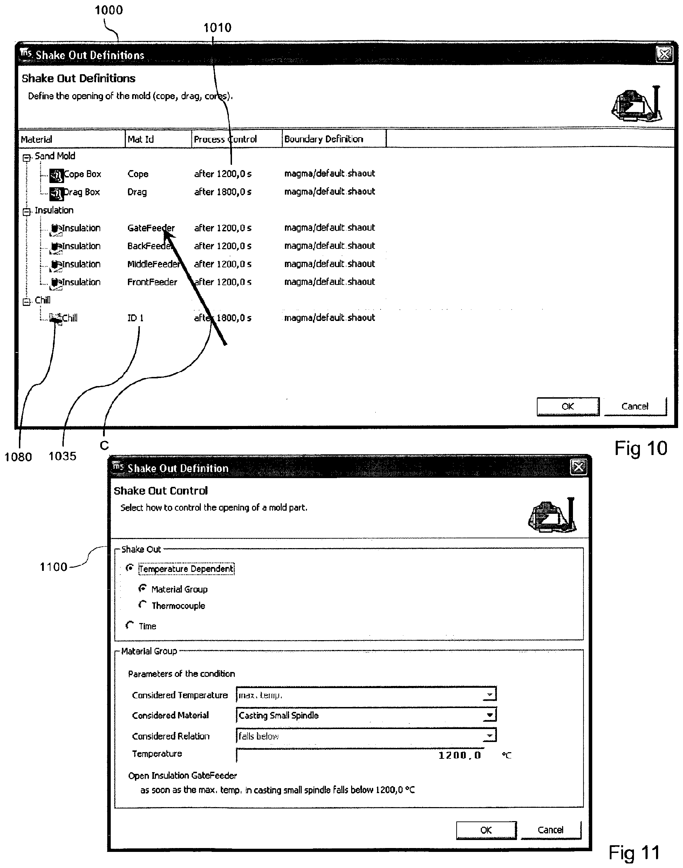

In one such embodiment a controller is configured to receive input parameters that govern the process such as boundary conditions, see fig 10.

In one embodiment a controller is configured to display a process timing object at a position in the timeline window 373 corresponding to the event time.

In one embodiment a controller is configured to receive a drag-and-drop input indicating a process timing object 379 and in response thereto move the process timing window to a new event time and update the process timing object's 379 event time accordingly.

In one embodiment the process step separator 376 is displayed coinciding with an event time.

In one embodiment a controller is configured to display a process timing object as comprising an event time indicator 381, which clearly marks which event time a process timing object is associated with.

A component is thereby associated with a process step object 378 through a process timing object 379.

In one embodiment a component is directly associated with a process step object.

In one embodiment a process step object is associated with an event time. In such an embodiment the event time is the time on which the process step is to be performed for an associated component unless other event times are specified. For example, such other event times may be specified through a process timing object 379 that is associated with a component. A component 335 thus being associated with both a process step object 378 and a process timing object 379 will potentially be associated with two event times.

In one embodiment the event time for the process timing object 379 will be decisive for when the process step is to be performed in the simulation.

This allows for a process step to be defined broadly for a group of components and then specifically amended for specific components 335.

In the example of figure 3b a process step 378b is associated with two components 335a and b. A first process timing object 379a is associated with the process step object 378b and component "Comp 2" 335b. A second process timing object 379b is associated with the same process step object 378b but with the other component "Comp 1" 335a. From the figure it is clear that the two process timing objects 379a and b have different event times. In this example it is indicated in the figure that the first process timing object 379b has the same event time as the process step object 378a. During a simulated run of the process the process step corresponding to the process step object 378a is executed at the first event time 379b for component "Comp 1" 335a and at the second event time 379c for component "Comp 2" 335b.

In one embodiment the process view window 370 comprises a component window 374.

A controller is configured to display at least one component in the component window 374.

In one embodiment the controller is configured to display at least one material in the component window 374.

In one embodiment a controller is configured to display a component for each material wherein said component is made of the material it is being displayed for.

In one embodiment a controller is configured to associate each process timing object 379 with a component 335. Through this association each object is associated with at least one process step object 378 and an event time when the process step is to be performed or started.

In one embodiment the process view window 370 comprises a process information window 375. In one embodiment data concerning the process is displayed by a controller in the process information window.

This provides a coupling between a component and a process step which is easy to understand and overview for a user by viewing the displayed information.

The embodiments described above (and below) also provide a manner to switch between a structural view and a process view which makes it easy for a user to intuitively understand and to change a process simulation setup in regards to parameters concerning the structures, conditions for the process steps and event times for each process step and a corresponding component.

In one embodiment a controller is configured to display a series of dialogue windows each prompting a user to input at least one process parameter, a condition or other data necessary for the simulation. Such dialogues are known from prior art systems and will not be described in great detail. One such system is the MAGMASOFT® V 4.4 software. In such a system a series of dialogue windows are displayed to a user and a controller is configured to receive input as it is provided by a user.

A dialogue input method according to the teachings herein will be described in more detail below.

In an example embodiment for use with simulating an injection molding process the following data is attached to the simulation and can be determined by the user of the simulation software. It should be noted that depending on the embodiment some data may be omitted or added to the listing of data below.

Tool (Die / Mold):
- Stiffness (Construction)
- Cooling
- Material
- Thermal properties
- Friction properties / surface roughness

Part (molded article):
- Wall thickness
- Cross sections
- Plane projection
- Undercut

Polymer or Metal Alloy:
- Friction properties
- Mechanical properties
- Thermophysical data
- Shrinkage characteristics

Process parameters:
- Pressure curve
- Temperature development
- Contact temperature

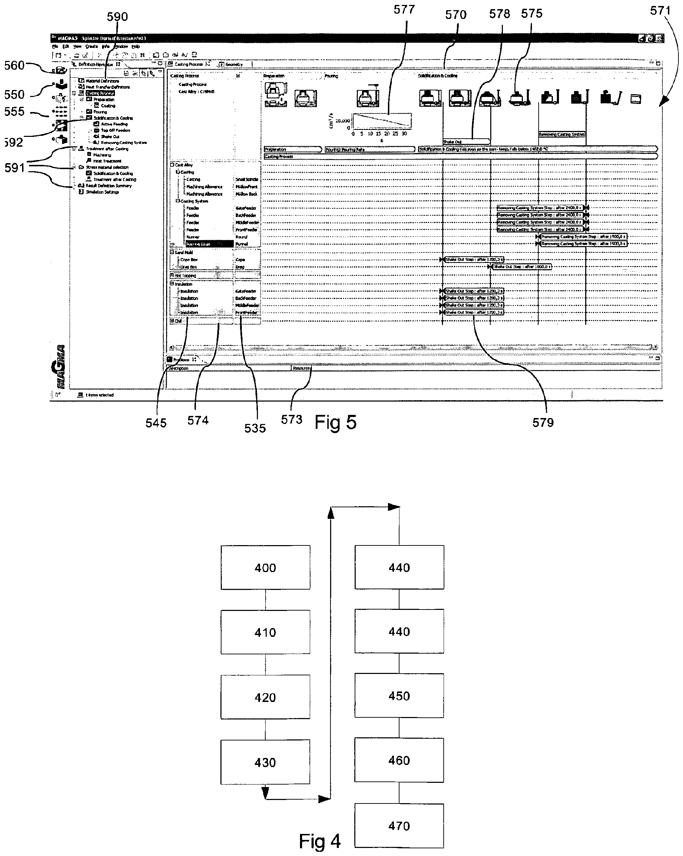

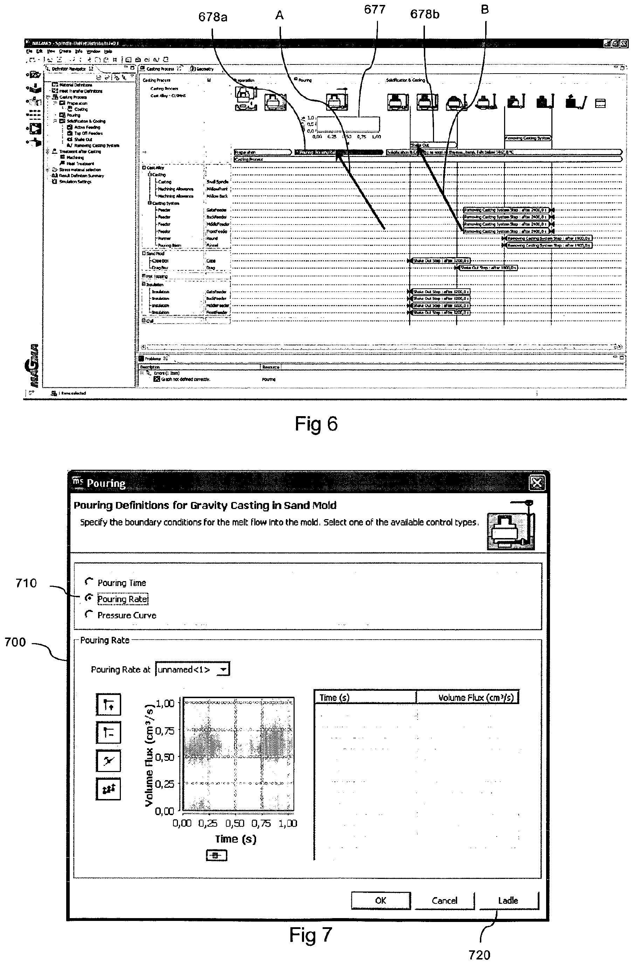

Similar example embodiments are shown in figures 5 and 6.

It should be noted that the windows in the description above need not be separate windows, but can be views that are a part of a window.

In one embodiment the process overview window 371, process flow window 372 and the timeline window 373 all form part of the process view window 370. This is the case in figure 3b.

The same is also possible for the other windows mentioned in this description as would be clear to a skilled person.

Figure 4 shows a flow chart of a basic method according to the teachings herein. In block 400 a computer model of at least one component is provided and is displayed in block 410. In block 420 an input indicating a component is received and the component is updated in block 430. In block 440 at least one process step object for the process to be simulated is displayed. The process step object is associated with a process parameter. In block 450 an input indicating a process step object is received and in block 460 the parameter is updated.

In block 470 a simulation of the process is performed on the at least one component, simulating each process step according to the process step object's (378) associated parameters and an event time thereby utilizing a link between the component and the process object and their respective parameters.

Figure 5 shows a screen shot view of an example user interface being implemented in an apparatus such as above.

Figure 5 shows a window having a dialogue view 590 and a process view 570. The process view 570 has a process overview 571 in which a number of process steps identified by process graphical symbols 575 are displayed. Also shown is a process parameter 577.

A number of process step objects 578 are also displayed. In this example they are illustrated by labeled arrows that provide an intuitive description of the flow of the process step.

In one embodiment the controller is configured to display a list of components and their corresponding materials. In one such embodiment the controller is configured to display the materials and the components made of that material as being associated to the material. See fig 5 where a list of materials 545 is displayed along with the components they are made of. In this example the components 535 are grouped according to the material 545.

Process timing objects 579 are displayed for some of the components 535.

Also displayed are a number of view switching buttons 560, 550, 555 which causes a different view to be shown as they are pressed, tapped or activated.

Figure 6 shows a similar view where two process step objects 678a and 678b are displayed. In the following it will be described how parameters for these two objects are set.

In one example a controller receives an input (reference arrow A) indicating the first process step object 678a which is the process step object for the pouring step of the casting or molding process.

A window 700, see figure 7, is displayed in which a number of characteristics for a parameter associated with the process step object 678a is shown. In this example the characteristics 710 refer to the pouring and can be set to relate to the pouring time, pouring rate or the pressure curve.

In this example a controller is configured to provide a calculation assistant for aiding a user in setting appropriate values for the parameter. A user activates such a calculation assistant by pressing on a special icon 720. In this example the icon is labeled "Ladle" to indicate to a user that Ladle setting can be made through the icon 720.

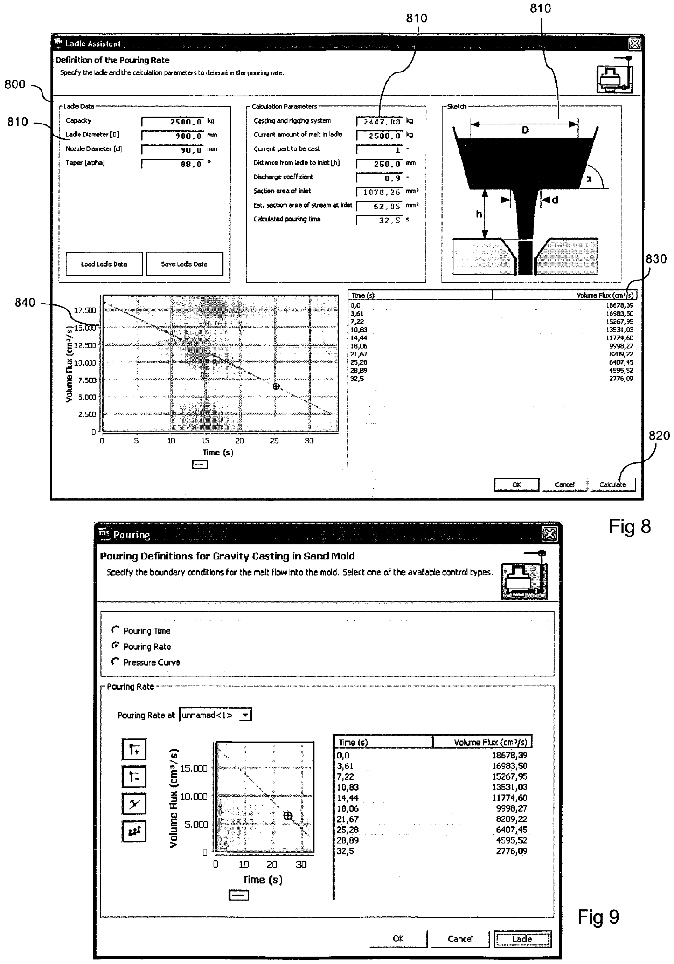

In response thereto a further window 800 is displayed, see figure 8. In this window 800 several characteristics of a ladle are displayed and a user can set the measurements and other data 810 and instruct the controller to perform necessary calculations by pressing on an icon 820.

Resulting pouring data 830 is then produced and displayed. In this example a graph 840 of the resulting data is also displayed.

As a controller receives acceptance of these data 830 the controller updates the first window (700) see figure 9.

As all parameters are set a controller updates the process view 570. A comparison between the starting view of figure 6 and the resulting view of figure 5 shows that in figure 5 the graph 840 is also shown in the process view 570 for the parameter 577.

In one example a controller receives an input (reference arrow B) indicating the second process step object 678b which is the process step object for the shake out step of the casting or molding process.

A window 1000, see figure 10, is displayed in which a number of components 1035 associated with the process step object 678b are shown. In this example the components are grouped after their material 1080.

An event time 1010 for each component 1035 is also displayed.

Should a user wish to change the parameters for a component he indicates the component. In figure 10 this is indicated be reference arrow C.

A controller is configured to receive input indicating a component 1035 and in response thereto show a window 1100, see figure 11, in which parameters for the process step are shown.

In this example parameters for the control of the process step, such as temperature dependent or time dependent are displayed. In this example the further parameters for the Temperature Dependent; Material group are shown and are Considered temperature, Considered Material, Considered relation and temperature.

As the parameters are accepted the corresponding process step objects are updated and if a process timing object is associated then the process step object is also updated by the controller.

It should be noted that the process view described above can also be used to describe other processes for example after molding treatments such as machining or heat treatment.

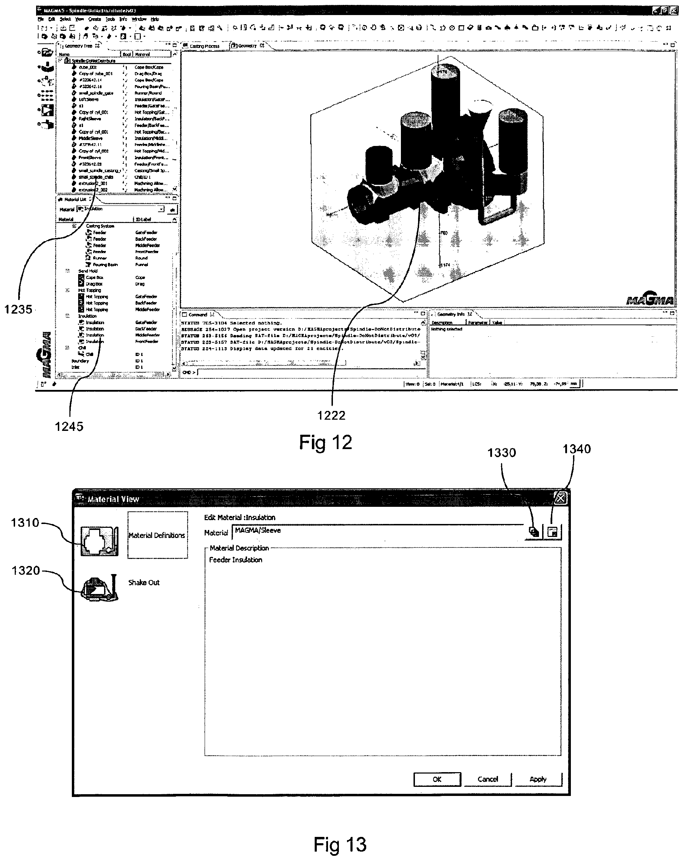

In one example of the embodiments described above a controller is configured to allow a user to access parameters by selecting a corresponding object, such as a process step. In this way a parameter can be accessed from everywhere where the parameter itself is displayed or where a linked/associated component or linked/associated material is displayed (578, 579 of fig 5; 1245 of fig 12 and 590 through subgroup 592 in fig 5).

Figure 12 shows a screen shot view of an example embodiment of the component view of figure 3a. A model 1222 is displayed and a list of components 1235 and corresponding materials 1245 are shown.

A controller is configured to receive an input indicating a material 1245 and in response thereto display a window (see fig 13) in which parameters of the material is displayed and may be changed by a user.

In one embodiment a controller is configured to receive an input indicating a component and in response thereto display a window (see fig 13) in which parameters of the material assigned to the component is displayed and may be changed by a user.

In this embodiment two groups of parameters are displayed. The first group 1310 relates to material definitions and the second group relates to shakeout properties 1320.

If a user selects the first parameter group 1310 information about the material is displayed. Such information is the name of the material and a description.

Also shown are two icons indicating that the material may be changed 1330 or the material's properties may be changed or edited 1340.

A controller is configured to receive input indicating that the material and/or its properties should be changed or edited.

If a material is to be changed the controller is configured to display a list of materials and receive a selection of a material from the list and use the selected material as the material.

Such a list of materials may be stored locally or remotely and can also be downloaded to an apparatus in real time.

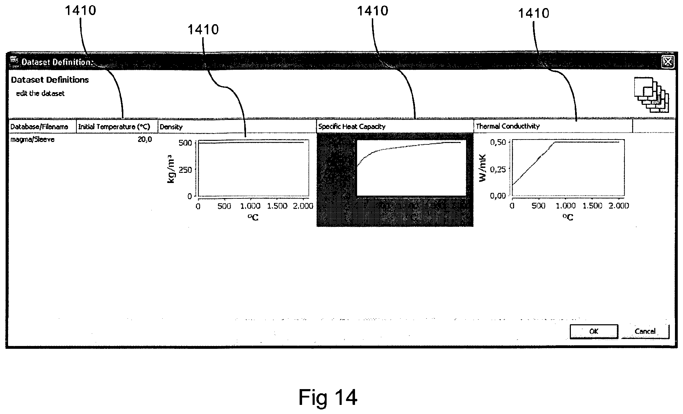

If a material is to be edited a controller is configured to display a window showing material properties 1410, see figure 14. In this example such properties 1410 are Initial temperature, Density, Specific Heat Capacity and Thermal Conductivity.

In one embodiment a controller is configured to receive an input indicating a property and in response thereto launch a window through which the property may be altered.

In one embodiment a controller is configured to receive an input indicating a property and in response thereto show input fields through which the property may be altered.

In one embodiment a parameter group 1320 is associated with a process step object. A controller is configured to display a window such as in fig 11 if such a parameter group 1320 is selected by a user.

There is thus a clear link between components and the process.

It should be clear that the parameters, properties etc. described above may be edited or changed in any order. This makes it easy for a user to input the data needed for the simulation as the user can do it in the manner he finds most intuitive. It is also possible to change the properties and parameters etc. in any wanted order.

To help guide a user through the various steps needed to input all necessary data a dialogue sequence is provided. Returning to figure 5 a dialogue tree is displayed. In the dialogue tree various data groups 591 are shown.

In this example the data groups 591 are material definitions; heat transfer definitions; casting process; treatment after casting; stress material selection; Result definition and simulation settings.

In one embodiment a datagroup has a subtree 592 or subgroup. In this example the Casting Process data group has the subgroups: Preparation, Pouring; Solidification and Cooling. Solidification and Cooling in turn has the subgroups Active feeding; Top off feeders; Shake out; Remove cast.

In one embodiment a controller prompts a user to input data by displaying dialogue windows or views for each data group step by step.

This aids the user in making sure all data has been input.

In one embodiment a controller is configured to receive input indicating a datagroup and in response thereto display a dialogue window.

This allows a user to input data in a flexible manner.

In one embodiment a controller is configured to prompt a user to input data by displaying dialogue windows or views for each data group that is not completely filled in step by step. Alternately, warnings or error messages are displayed to summarize for the user the definitions that still need to be checked or completed before the simulation can be carried out.

This helps the user to make sure that all data are input before initiating a simulation.

In one embodiment the controller is configured to start the simulation once all data has been input or received. In one such embodiment the controller is configured to evaluate and display the results of the simulation.

The dialogue windows or views that are displayed are similar to the ones described with reference to figures 7, 10 and 14.

The simulation as described above may be executed through program or software code instructions which are stored on and fetched or read from a computer readable medium such as a hard drive, Universal Serial Bus memory device, a compact Disc (CD) a Digital Video Disc (DVD), a Blue Ray™ disc, a Random access Memory (RAM) or a Read-Only Memory (ROM). The medium may be local to an apparatus implementing the teachings of this application or remote to such an apparatus.

The various aspects of the teaching of the present document described above can be used alone or in various combinations. The teaching of the present document is preferably implemented by a combination of hardware and software, but can also be implemented in hardware or software.

The teaching of this document has numerous advantages. Different embodiments or implementations may yield one or more of the following advantages. It should be noted that this is not an exhaustive list and there may be other advantages which are not described herein. One advantage is that it provides a clear link between process steps and components of a model. It is yet another advantage that it provides an easy manner to update both process parameters and components parameters. It is a further advantage that it provides an easy manner to update parameters in any order wanted and without having to input each parameter in sequence.

Although the teaching in this document has been described in detail for purpose of illustration, it is understood that such detail is solely for that purpose, and variations can be made therein by those skilled in the art without departing from the scope of the teaching.

For example, although the teaching has been described in terms of an injection molding process and a casting process it should be appreciated that the teaching may also be applied to other types of mold filling processes such as e.g. blow molding. The teaching herein may also be applied to the simulation of mechanical stress of materials during solidification and heat treatment.

Features described in the preceding description may be used in combinations other than the combinations explicitly described.

Whilst endeavoring in the foregoing specification to draw attention to those features of the teaching of the present document believed to be of particular importance it should be understood that the Applicant claims protection in respect of any patentable feature or combination of features hereinbefore referred to and/or shown in the drawings whether or not particular emphasis has been placed thereon.

The term "comprising" as used in the claims does not exclude other elements or steps. The term "a" or "an" as used in the claims does not exclude a plurality. The single processor or other unit may fulfill the functions of several means recited in the claims.

## Claims

1. A method for simulating a casting or molding process in a computer comprising at least one controller (200) configured to receive and execute instructions, said method comprising:
arranging said controller (200) to provide a plurality of views for said same process to be simulated and interlinking said plurality of views such that an input in one view is updated in all other views;
providing a computerized geometric model (322) of at least one geometric component (335) of a casting;
receiving an input indicating a component (324, 326, 328, 335) and in response thereto update said component;
displaying at least one process step object (378) for the process, said process step object being associated with one or more process parameter;
receiving an input indicating a process step object (378) and in response thereto update said parameter; and
performing a simulation of said process on the at least one component (335), simulating each process step according the process step object's (378) associated parameters and an event time.

2. A simulation method according to claim 1, further comprising
displaying at least one material (345) being associated with at least one component (335) and
receiving an input indicating a material (345) and in response thereto update said at least one associated component (335).

3. A simulation method according to claim 1, further comprising:
displaying at least one process timing object (379) having an event time and being associated with a process step object (378) and a component (335) and
receiving an input indicating a process timing object (379) and in response thereto update said event time.

4. A simulation method according to claim 3, wherein said process timing object (379) and said process step object (378) are the same object.

5. A simulation method according to claim 1, further comprising associating an event time with a process step object (378).

6. A simulation method according to claim 3 and 5, wherein said event time is associated with all components (335) being associated with said process step object (378) and not being associated with a process timing object (379).

7. A simulation method according to claim 1, further comprising displaying a process view (370) comprising graphical representations of at least one process step object (378) and process timing object (379) and displaying an associated component (335).

8. A simulation method according to claim 1, further comprising receiving an input indicating a process timing object (379) and in response thereto updating said event time for said associated component (335).

9. A simulation method according to claim 1, further comprising:
displaying said at least one component (335) in a first view (320);
receiving an input indicating a view switch; and in response thereto
displaying said process step object (378) in a second view (370) .

10. A simulation method according to claim 1, further comprising receiving an input indicating a process step object (378) and in response thereto displaying a list of at least one component (335) being associated with said process step object (378) and updating a parameter associated with at least one of said at least one component (335) being associated with said process step object (378).

11. A simulation method according to claim 1, further comprising:
displaying a graphical representation (377) of a parameter;
receiving an input indicating said graphical representation of a parameter;
in response thereto displaying a window
receiving an updated parameter value; and
displaying said a graphical representation (377) of said updated parameter.

12. A simulation method according to claim 1, further comprising:
displaying a graphical representation (375) of a process step;
receiving an input indicating said process step;
in response thereto displaying a window showing at least one associated parameter;
receiving an updated parameter value; and
displaying said a graphical representation (377) of said updated parameter.

13. **An apparatus** for **simulating a casting or molding process comprising at least one controller (200), said at least one controller (200) being configured to:**
provide a plurality of views for said same process to be simulated and interlinking said plurality of views such that an input in one view is updated in all other views;
provide a computerized geometric model (322) of at least one geometric component (335) of a casting;
receive an input indicating a component (324, 326, 328, 335) and in response thereto update said component;
display at least one process step object (378) for the process, said process step object being associated with one or more process parameter;
receive an input indicating a process step object (378) and in response thereto update said parameter;
perform a simulation of said process on the at least one component (335), simulating each process step according the process step object's (378) associated parameters and an event time.

14. A computer readable medium including at least computer program code for **simulating a casting or molding process, said computer readable medium comprising:**
software code for providing a plurality of views for said same process to be simulated and interlinking said plurality of views such that an input in one view is updated in all other views;
software code **for** providing a computerized geometric model (322) of at least one geometric component (335) of a casting;
software code for receiving an input indicating a component (324, 326, 328, 355) and in response thereto update said component;
software code for displaying at least one process step object (378) for the process, said process step object being associated with one or more process parameter;
software code for receiving an input indicating a process step object (378) and in response thereto update said parameter;
**software code** for performing a simulation of said process on the at least one component (335), simulating each process step according the process step object's (378) associated parameters and an event time.

## Patentansprüche

1. Verfahren zum Simulieren eines Gieß- oder Formgebungsprozesses in einem Computer, mindestens eine Steuerung (200) umfassend, die dafür konfiguriert ist, Befehle zu empfangen und auszuführen, wobei das Verfahren Folgendes umfasst:
Anordnen der Steuerung (200), um eine Vielzahl von Ansichten desselben zu simulierenden Prozesses bereitzustellen, und Verknüpfen dieser Vielzahl von Ansichten derart, dass eine Eingabe in einer Ansicht in allen anderen Ansichten aktualisiert wird,
Bereitstellen eines computergenerierten geometrischen Modells (322) von mindestens einer geometrischen Komponente (335) eines Gussteils,
Empfangen einer Eingabe, die eine Komponente (324, 326, 328, 335) indiziert, und in Reaktion darauf Aktualisieren der Komponente,
Anzeigen mindestens eines Prozessschrittobjekts (378) für den Prozess, wobei das Prozessschrittobjekt mit einem oder mehreren Prozessparametern assoziiert ist,
Empfangen einer Eingabe, die ein Prozessschrittobjekt (378) indiziert, und in Reaktion darauf Aktualisieren des Parameters und
Durchführen einer Simulation des Prozesses auf mindestens einer Komponente (335), dabei Simulieren jedes Prozessschrittes gemäß der mit dem Prozessschrittobjekt (378) assoziierten Parameter und einer Ereigniszeit.

2. Simulationsverfahren nach Anspruch 1, ferner Folgendes umfassend:
Anzeigen mindestens eines Materials (345), das mit mindestens einer Komponente (335) assoziiert ist, und
Empfangen einer Eingabe, die ein Material (345) indiziert, und in Reaktion darauf Aktualisieren der mindestens einen assoziierten Komponente (335).

3. Simulationsverfahren nach Anspruch 1, ferner Folgendes umfassend:
Anzeigen mindestens eines Prozesszeitobjekts (379), das eine Ereigniszeit aufweist und mit einem Prozessschrittobjekt (378) und einer Komponente (335) assoziiert ist, und
Empfangen einer Eingabe, die ein Prozesszeitobjekt (379) indiziert, und in Reaktion darauf Aktualisieren der Ereigniszeit.

4. Simulationsverfahren nach Anspruch 3, wobei das Prozesszeitobjekt (379) und das Prozessschrittobjekt (378) dasselbe Objekt sind.

5. Simulationsverfahren nach Anspruch 1, ferner umfassend das Zuordnen einer Ereigniszeit zu einem Prozessschrittobjekt (378).

6. Simulationsverfahren nach Anspruch 3 und 5, wobei die Ereigniszeit assoziiert ist mit allen Komponenten (335), die assoziiert sind mit Prozessschrittobjekt (378) und nicht assoziiert sind mit Prozesszeitobjekt (379).

7. Simulationsverfahren nach Anspruch 1, ferner umfassend das Anzeigen einer Prozessansicht (370), ferner umfassend die grafische Darstellung von mindestens einem Prozessschrittobjekt (378) und Prozesszeitobjekt (379), und Anzeigen einer assoziierten Komponente (335).

8. Simulationsverfahren nach Anspruch 1, ferner umfassend das Empfangen einer Eingabe, die ein Prozesszeitobjekt (379) indiziert, und in Reaktion darauf Aktualisieren der Ereigniszeit für die zugeordnete Komponente (335).

9. Simulationsverfahren nach Anspruch 1, ferner Folgendes umfassend:
Anzeigen der mindestens einen Komponente (335) in einer ersten Ansicht (320) und
Empfangen einer Eingabe, die einen Ansichtswechsel indiziert, und in Reaktion darauf Anzeigen des Prozessschrittobjekts (378) in einer zweiten Ansicht (370).

10. Simulationsverfahren nach Anspruch 1, ferner umfassend das Empfangen einer Eingabe, die ein Prozessschrittobjekt (378) indiziert, und in Reaktion darauf Anzeigen einer Liste von mindestens einer Komponente (335), die mit dem Prozessschrittobjekt (378) assoziiert ist, und Aktualisieren eines Parameters, der assoziiert ist mit mindestens einer der mindestens einen Komponente (335), die mit dem Prozessschrittobjekt (378) assoziiert ist.

11. Simulationsverfahren nach Anspruch 1, ferner Folgendes umfassend:
Anzeigen einer grafischen Darstellung (377) eines Parameters,
Empfangen einer Eingabe, welche die grafische Darstellung eines Parameters indiziert,
in Reaktion darauf Anzeigen eines Fensters,
Empfangen eines aktualisierten Parameterwertes und
Anzeigen der grafischen Darstellung (377) des aktualisierten Parameters.

12. Simulationsverfahren nach Anspruch 1, ferner Folgendes umfassend:
Anzeigen einer grafischen Darstellung (375) eines Prozessschrittes,
Empfangen einer Eingabe, die den Prozessschritt indiziert,
in Reaktion darauf Anzeigen eines Fensters, das mindestens einen assoziierten Parameter zeigt, ,
Empfangen eines aktualisierten Parameterwertes und
Anzeigen der grafischen Darstellung (377) des aktualisierten Parameters.

13. Vorrichtung zum Simulieren eines Gieß- oder Formgebungsprozesses, mindestens eine Steuerung (200) umfassend, wobei die mindestens eine Steuerung (200) für Folgendes konfiguriert ist:
Bereitstellen einer Vielzahl von Ansichten desselben zu simulierenden Prozesses und Verknüpfen dieser Vielzahl von Ansichten derart, dass eine Eingabe in einer Ansicht in allen anderen Ansichten aktualisiert wird,
Bereitstellen eines computergenerierten geometrischen Modells (322) von mindestens einer geometrischen Komponente (335) eines Gussteils,
Empfangen einer Eingabe, die eine Komponente (324, 326, 328, 335) indiziert, und in Reaktion darauf Aktualisieren der Komponente,
Anzeigen mindestens eines Prozessschrittobjekts (378) für den Prozess, wobei das Prozessschrittobjekt mit einem oder mehreren Prozessparametern assoziiert ist,
Empfangen einer Eingabe, die ein Prozessschrittobjekt (378) indiziert, und in Reaktion darauf Aktualisieren des Parameters und
Durchführen einer Simulation des Prozesses auf mindestens einer Komponente (335), dabei Simulieren jedes Prozessschrittes gemäß der mit dem Prozessschrittobjekt (378) assoziierten Parameter und einer Ereigniszeit.

14. Computerlesbares Medium, beinhaltend mindestens Computerprogrammcode zum Simulieren eines Gieß- oder Formgebungsprozesses, wobei das computerlesbare Medium Folgendes umfasst:
Software-Code zum Bereitstellen einer Vielzahl von Ansichten desselben zu simulierenden Prozesses und zum Verknüpfen der Vielzahl von Ansichten derart, dass eine Eingabe in eine Ansicht in allen anderen Ansichten aktualisiert wird,
Software-Code zum Bereitstellen eines computergenerierten geometrischen Modells (322) von mindestens einer geometrischen Komponente (335) eines Gussteils,
Software-Code zum Empfangen einer Eingabe, die eine Komponente (324, 326, 328, 335) indiziert, und in Reaktion darauf Aktualisieren der Komponente,
Software-Code zum Anzeigen mindestens eines Prozessschrittobjekts (378) für den Prozess, wobei das Prozessschrittobjekt mit einem oder mehreren Parametern assoziiert ist,
Software-Code zum Empfangen einer Eingabe, die ein Prozessschrittobjekt (378) indiziert, und in Reaktion darauf Aktualisieren des Parameters,
Software-Code zum Durchführen einer Simulation des Prozesses auf mindestens einer Komponente (335), dabei Simulieren jedes Prozessschrittes gemäß der mit dem Prozessschrittobjekt (378) assoziierten Parameter und einer Ereigniszeit.

## Revendications

1. Procédé de simulation d'un processus de coulage ou de moulage dans un ordinateur comprenant au moins un contrôleur (200) configuré pour recevoir et exécuter des instructions, ledit procédé comprenant :
l'agencement dudit contrôleur (200) afin de fournir une pluralité de vues pour la simulation dudit processus et l'enchaînement des vues de ladite pluralité de vues de telle sorte qu'une entrée dans une vue est mise à jour dans toutes les autres vues ;
la fourniture d'un modèle géométrique informatisé (322) d'au moins un composant géométrique (335) d'un coulage ;
la réception d'une entrée indiquant un composant (324, 326, 328, 335), et en réponse à cela la mise à jour dudit composant ;
l'affichage d'au moins un objet d'étape de processus (378) pour le processus, ledit objet d'étape de processus étant associé à un ou plusieurs paramètres de processus ;
la réception d'une entrée indiquant un objet d'étape de processus (378), et en réponse à cela la mise à jour dudit paramètre ; et
la mise en œuvre d'une simulation dudit processus sur ledit au moins un composant (335), en simulant chaque étape de processus conformément aux paramètres associés à l'objet d'étape de processus (378) et à un moment d'événement.

2. Procédé de simulation selon la revendication 1, comprenant en outre :
l'affichage d'au moins un matériau (345) associé à au moins un composant (335), et
la réception d'une entrée indiquant un matériau (345), et en réponse à cela la mise à jour dudit au moins un composant associé (335).

3. Procédé de simulation selon la revendication 1, comprenant en outre :
l'affichage d'au moins un objet de synchronisation de processus (379) ayant un moment d'événement et associé à un objet d'étape de processus (378) et à un composant (335), et
la réception d'une entrée indiquant un objet de synchronisation de processus (379), et en réponse à cela la mise à jour dudit moment d'événement.

4. Procédé de simulation selon la revendication 3, dans lequel ledit objet de synchronisation de processus (379) et ledit objet d'étape de processus (378) sont le même objet.

5. Procédé de simulation selon la revendication 1, comprenant en outre l'association d'un moment d'événement à un objet d'étape de processus (378).

6. Procédé de simulation selon les revendications 3 et 5, dans lequel ledit moment d'événement est associé à tous les composants (335) associés audit objet d'étape de processus (378) et non associés à un objet de synchronisation de processus (379).

7. Procédé de simulation selon la revendication 1, comprenant en outre l'affichage d'une vue de processus (370) comprenant des représentations graphiques d'au moins un objet d'étape de processus (378) et un objet de synchronisation de processus (379) et l'affichage d'un composant associé (335).

8. Procédé de simulation selon la revendication 1, comprenant en outre la réception d'une entrée indiquant un objet de synchronisation de processus (379), et en réponse à cela la mise à jour dudit moment d'événement pour ledit composant associé (335).

9. Procédé de simulation selon la revendication 1, comprenant en outre :
l'affichage d'au moins un composant (335) dans une première vue (320) ;
la réception d'une entrée indiquant un changement de vue ; et en réponse à cela
l'affichage dudit objet d'étape de processus (378) dans une deuxième vue (370).

10. Procédé de simulation selon la revendication 1, comprenant en outre la réception d'une entrée indiquant un objet d'étape de processus (378), et en réponse à cela l'affichage d'une liste d'au moins un composant (335) associé audit objet d'étape de processus (378) et la mise à jour d'un paramètre associé à au moins un desdits au moins un composant (335) associés audit objet d'étape de processus (378).

11. Procédé de simulation selon la revendication 1, comprenant en outre :
l'affichage d'une représentation graphique (377) d'un paramètre ;
la réception d'une entrée indiquant ladite représentation graphique d'un paramètre ;
en réponse à cela, l'affichage d'une fenêtre recevant une valeur de paramètre mise à jour ; et
l'affichage de ladite représentation graphique (377) dudit paramètre mis à jour.

12. Procédé de simulation selon la revendication 1, comprenant en outre :
l'affichage d'une représentation graphique (375) d'une étape de processus ;
la réception d'une entrée indiquant ladite étape de processus ;
en réponse à cela, l'affichage d'une fenêtre montrant au moins un paramètre associé ;
la réception d'une valeur de paramètre mis à jour ; et
l'affichage de ladite représentation graphique (377) dudit paramètre mis à jour.

13. Appareil de simulation d'un processus de coulage ou de moulage comprenant au moins un contrôleur (200), ledit au moins un contrôleur (200) étant configuré pour :
la fourniture d'une pluralité de vues pour la simulation dudit processus et l'enchaînement des vues de ladite pluralité de vues de telle sorte qu'une entrée dans une vue est mise à jour dans toutes les autres vues ;
la fourniture d'un modèle géométrique informatisé (322) d'au moins un composant géométrique (335) d'un coulage ;
la réception d'une entrée indiquant un composant (324, 326, 328, 335), et en réponse à cela la mise à jour dudit composant ;
l'affichage d'au moins un objet d'étape de processus (378) pour le processus, ledit objet d'étape de processus étant associé à un ou plusieurs paramètres de processus ;
la réception d'une entrée indiquant un objet d'étape de processus (378), et en réponse à cela la mise à jour dudit paramètre ;
la mise en œuvre d'une simulation dudit processus sur ledit au moins un composant (335), en simulant chaque étape de processus conformément aux paramètres associés à l'objet d'étape de processus (378) et à un moment d'événement.

14. Support lisible par un ordinateur, comprenant au moins un code de programme informatique pour simuler un processus de coulage ou moulage, ledit support lisible par un ordinateur comprenant :
un code logiciel pour fournir une pluralité de vues pour la simulation dudit processus et l'enchaînement des vues de ladite pluralité de vues de telle sorte qu'une entrée dans une vue est mise à jour dans toutes les autres vues ;
un code logiciel pour fournir un modèle géométrique informatisé (322) d'au moins un composant géométrique (335) d'un coulage ;
un code logiciel pour la réception d'une entrée indiquant un composant (324, 326, 328, 335), et en réponse à cela pour la mise à jour dudit composant ;
un code logiciel pour l'affichage d'au moins un objet d'étape de processus (378) pour le processus, ledit objet d'étape de processus étant associé à un ou plusieurs paramètres de processus ;
un code logiciel pour la réception d'une entrée indiquant un objet d'étape de processus (378), et en réponse à cela pour la mise à jour dudit paramètre ;
un code logiciel pour la mise en œuvre d'une simulation dudit processus sur ledit au moins un composant (335), en simulant chaque étape de processus conformément aux paramètres associés à l'objet d'étape de processus (378) et à un moment d'événement.
